# FASCICULE DE BREVET EUROPEEN

(11) **EP 0 782 151 B1**
(45) Date de publication et mention de la délivrance du brevet: **13.02.2002**
(21) Numéro de dépôt: 96402863.3
(22) Date de dépôt: 23.12.1996
(51) Int. Cl.: H01B 1/12, H01B 7/00, B29C 43/00

(54) **Procédé de fabrication d'une polymère de conductivité électrique améliorée, application de ce procédé à la fabrication de câble et câble obtenu par ce procédé**
Herstellungsverfahren von einem verbesserten elektrisch leitfähigen Polymer, deren Anwendung zur Herstellung von elektrischem Kabel und Kabel mittels diesem Verfahren gefertigt
Method of manufacturing an improved electrically conductive polymer, its use in the manufacture of electric cable and cable manufactured by this method

(30) Priorité: 28.12.1995 FR 9515654
(43) Date de publication de la demande: 02.07.1997
(73) Titulaire: Nexans, 75008 Paris (FR)
(72) Inventeur: Cottevieille, Denis, 93100 Montreuil (FR); Legat, Denis, 91090 Lisses (FR); Galaj, Stanislas, 94110 Arcueil (FR); Cariou, Frédéric, 91380 Chilly-Mazarin (FR); Le Mehaute, Alain, 91190 Gif Sur Yvette (FR)
(74) Mandataire: Feray, Valérie

(56) Documents cités:
- EP-A- 0 168 621
- EP-A- 0 416 452
- WO-A-89/02155

## Description

La présente invention concerne un procédé de fabrication d'un polymère à conductivité élevée. Elle s'étend en outre à l'application de ce procédé à la fabrication de câble et au câble obtenu par ce procédé.

Dans l'état actuel des connaissances, la conductivité d'un polymère conducteur dépend fortement de son mode de synthèse. Le dopage permet de conférer des propriétés de conductivité à certains polymères. Plusieurs méthodes de mise en forme ont été étudiées pour augmenter la conductivité de ces polymères. Ainsi il a aussi été proposé de réaliser un étirage mécanique uniaxial à froid sur des films de polyéméraldine avant dopage par protonation. Ce procédé consiste à exercer une traction aux extrémités opposées du film. Le taux d'allongement du film est limité à cause des risques de rupture. En outre ce procédé conduit à des films anisotropes. Des fils ont été obtenus par filage à chaud de polyaniline. Ces fils doivent être mis en forme par enroulement ce qui occasionne de fréquentes ruptures.

Le document WO 89/02155 mentionne un procédé de mise en forme d'une poudre de polymère conducteur par application d'une pression isostatique à l'aide d'une presse chauffante. La conductivité du polymère correspond à celle du produit de départ.

On a notamment proposé d'utiliser des polymères conducteurs dans la fabrication de câbles filtrants. Ces câbles de structure coaxiale comporte une âme métallique centrale entourée d'une couche d'un matériau composite semi-conducteur comprenant une matrice isolante et un polymère non dopé à liaisons conjuguées. Le câble est réalisé par coextrusion. Le polymère conducteur est dilué dans une matrice inerte ce qui diminue la conductivité du matériau et limite son efficacité. L'élaboration d'un tel matériau composite nécessite le chauffage du polymère conducteur à une température supérieure à la température de fusion de la matrice ce qui limite le choix du polymère conducteur, notamment en ce qui concerne les polymères dopés. Il apparait donc nécessaire de pouvoir élaborer une couche semi-conductrice à partir d'un polymère conducteur pulvérulent sans recours à une matrice isolante.

La présente invention a pour but de proposer un procédé permettant d'obtenir des polymères présentant une conductivité électrique supérieure à celle des polymères conducteurs actuellement connus.

Un autre but de l'invention est de proposer un procédé de réalisation d'un câble comprenant une couche d'un matériau semi-conducteur qui présente une conductivité électrique supérieure à celle des matériaux actuellement utilisés.

L'objet de la présente invention est un procédé de fabrication d'un polymère de conductivité électrique élevée comprenant la combinaison des étapes suivantes réalisées à température ambiante:
- on introduit dans une première enveloppe une poudre constituée d'un premier polymère conducteur et on ferme hermétiquement ladite première enveloppe, ledit premier polymère conducteur étant choisi parmi une polyaniline, un copolymère de l'aniline avec un acide amino-naphtalène sulphonique, un copolymère de l'aniline avec l'acide 3-(3-aminobenzyloxy)-1-propane sulfonique, un copolymère de l'aniline avec l'acide 3-(2-aminophénoxy)-1-propane sulfonique, un copolymère de l'aniline avec l'acide 4- (2-aminophénoxy)-1-butane sulfonique, un copolymère de l'aniline avec le 1-amino 2, 6-bis (4-sulfobutoxy) benzène, et leurs mélanges,
- on comprime par pressage isostatique ladite poudre dans ladite première enveloppe pour former un barreau,
- on extrait ledit barreau de ladite première enveloppe et on introduit ledit barreau dans une deuxième enveloppe, ladite première et ladite deuxième enveloppe étant constituées d'un matériau continu déformable, chimiquement et mécaniquement compatible avec ledit premier polymère,
- on fait le vide et on ferme hermétiquement ladite enveloppe afin de former une billette,
- on effectue une transformation mécanique de ladite billette afin de réduire ses cotes transversales, ladite transformation mécanique consistant en au moins une opération d'étirage au travers d'une filière, lorsque le rapport des diamètres dudit barreau entre deux étirages successifs ne varie plus avec la réduction desdites cotes de ladite billette, on obtient un deuxième polymère dont la conductivité électrique est améliorée par rapport à celle dudit premier polymère,
- on extrait de ladite deuxième enveloppe un deuxième polymère de conductivité électrique plus élevée que celle dudit premier polymère.

Ce procédé a pour avantage de ne pas nécessiter de chauffage. Il permet d'utiliser des polymères conducteurs dopés ou non dopés pour autant qu'ils soient stables sous air à la température ambiante. De préférence le premier polymère est une polyaniline. Selon une variante, le premier polymère est un copolymère autodopé choisi parmi un copolymère de l'aniline avec un acide amino-naphtalène sulphonique, un copolymère de l'aniline avec l'acide 3-(3-aminobenzyloxy)-1-propane sulfonique, un copolymère de l'aniline avec l'acide 3-(2-aminophénoxy)-1-propane sulfonique, un copolymère de l'aniline avec l'acide 4-(2-aminophénoxy)-1-butane sulfonique, un copolymère de l'aniline avec le 1-amino 2, 6-bis (4-sulfobutoxy) benzène, et leurs mélanges. La synthèse de ces copolymères est décrite dans le brevet européen EP-0 512 926 publié le 11 novembre 1992. Le dopant peut être par exemple l'acide chlorhydrique (HCl), l'acide sulfurique (H₂SO₄), l'acide camphrosulphonique, ou bien encore un acide sulfonique substitué.

Selon une autre variante, ledit premier polymère est une polyaniline sulfonée.

La poudre de polymère est préalablement conditionnée par un étuvage sous vide afin d'en éliminer toute humidité résiduelle. La température déterminée par analyse thermique doit être adaptée à la nature du polymère.

La poudre de polymère conditionnée est placée à l'intérieur d'une première enveloppe. L'ensemble est d'abord soumis à vibrations pour obtenir la densité maximum de la poudre avant toute action mécanique. Puis la première enveloppe contenant la poudre est placée à température ambiante dans une presse isostatique dont la pression s'exerce en tout point de la surface externe de l'enveloppe. Avantageusement cette enveloppe est constituée d'un matériau souple et élastique, susceptible de retrouver sensiblement sa forme initiale après compactage. Le relâchement de l'enveloppe facilite l'extraction du barreau de polymère compacté. De préférence ladite première enveloppe est constituée d'un matériau choisi parmi un élastomère, comme par exemple du caoutchouc naturel (latex), le polychlorure de vinyle armé ou un silicone.

Le barreau de polymère compacté est extrait de la première enveloppe. La deuxième enveloppe a une épaisseur de paroi comprise entre 0,5mm et 5mm et un diamètre intérieur ajusté au diamètre du barreau de polymère. Le barreau de polymère peut être éventuellement rectifié par usinage pour s'adapter à la deuxième enveloppe. La deuxième enveloppe est constituée d'un matériau susceptible de se déformer sans entraver la transformation mécanique du polymère et inerte chimiquement vis à vis du polymère. De préférence ce matériau est choisi parmi un métal comme le cuivre, un alliage de métaux, comme par exemple le cupronickel, le laiton, le bronze monophasé, un polymère isolant comme le entraver la transformation mécanique du polymère et inerte chimiquement vis à vis du polymère. De préférence ce matériau est choisi parmi un métal comme le cuivre, un alliage de métaux, comme par exemple le cupronickel, le laiton, le bronze monophasé, un polymère isolant comme le polytétrafluoroéthylène (PTFE), le chlorure de polyvinyle (PVC), le polypropylène (PP), le polyéthylène (PE), le polyamide (PA), un mélange de polymères isolants et un alliage de polymères isolants.

On réalise la mise sous vide de la deuxième enveloppe juqu'à environ 0,4Pa (3.10⁻³mm de mercure) et celle-ci est fermée de manière étanche. Cette opération est destinée à éliminer l'air contenu dans le barreau de polyaniline compacté et à l'intérieur de l'enveloppe. Le temps et la pression de pompage sont adaptés à la nature du polymère et du dopage. Si de l'air restait inclus dans le barreau de polymère, il pourrait engendrer des surpressions dans la billette au cours de l'étirage et provoquer son éclatement.

La transformation mécanique de la billette s'effectue à température ambiante par passage dans une filière sous l'effet d'une traction continue, par exemple du type filière à galets, de manière à réduire la surface de la section transversale de la billette. Cette opération peut être renouvelée par passage dans des filières de dimension décroissante. La vitesse d'étirage est comprise entre 0,5 mètre par minute et 5 mètres par minute, et préférentiellement de 2 mètres par minute. Le taux de déformation varie de 8% à 312%. Il dépend de la nature et de l'épaisseur du matériau constituant la deuxième enveloppe. Un taux de 312% est par exemple obtenu avec un tube en cuivre recuit. Le choix du matériau constituant la deuxième enveloppe est limité par la compatibilité qui doit exister entre les caractéristiques mécaniques du matériau de l'enveloppe et celles du polymère conducteur. Le polymère est obtenu sous une forme massive de grande dureté. Diverses applications sont possibles selon la forme géométrique donnée à la section transversale de la billette. A titre d'exemple, on peut choisir une forme carrée, ou de préférence rectangulaire. Après étirage on obtient un ruban de section rectangulaire dont on supprime la partie métallique sur les petits côtés. Les surfaces de polymère conducteur ainsi mises à nu peuvent être protégées par un vernis, par exemple de type époxy ou polyuréthane acrylique. On réalise ainsi une ligne capacitive filtrante. Par exemple cette ligne filtrante peut être introduite comme composant dans des circuits électroniques, comme des lignes de retard, ou bien utilisée comme élément dans un circuit de filtrage.

Selon une variante de réalisation de l'invention, ledit premier polymère est coprécipité avec un polymère cristallin préalablement à son introduction dans ladite première enveloppe. Cette opération consiste à mettre en solution le premier polymère et un polymère cristallin, comme le polyéthylène (PEHD), le polypropylène (PP), les polyamides (PA6, PA6-6), le polyoxyméthylène (POM), le polytéréphtalate d'éthylène (PETP), le polyéther éther cétone (PEEK), le polyphénylène sulfure (PPS), dans un solvant capable de les dissoudre. La solution de polymère cristallin et de polymère conducteur est alors versée goutte à goutte dans un non-solvant des deux polymères ce qui provoque leur précipitation conjointe. Les particules de polymères conducteurs précipitant de préférence au voisinage des phases cristallines. Ainsi on améliore la conductivité du polymère conducteur.

Le polymère à conductivité élevée fabriqué par le procédé selon l'invention a une conductivité qui est au moins dix fois plus élevée que la conductivité dudit premier polymère.

La présente invention a aussi pour objet un procédé de de fabrication d'un câble à structure coaxiale comprenant une âme conductrice centrale entourée d'au moins une première couche en polymère conducteur recouverte d'une deuxième couche en matériau diélectrique, et une couche externe en métal, procédé comprenant la combinaison des étapes suivantes réalisées à température ambiante:
- on dispose dans une première enveloppe une poudre constituée d'un polymère conducteur autour de ladite âme centrale et on ferme hermétiquement ladite première enveloppe, ledit premier polymère conducteur étant choisi parmi une polyaniline, un copolymère de l'aniline avec un acide amino-naphtalène sulphonique, un copolymère de l'aniline avec l'acide 3-(3-aminobenzyloxy)-1-propane sulfonique, un copolymère de l'aniline avec l'acide 3-(2-aminophénoxy)-1-propane sulfonique, un copolymère de l'aniline avec l'acide 4-(2-aminophénoxy)-1-butane sulfonique, un copolymère de l'aniline avec le 1-amino 2, 6-bis (4-sulfobutoxy) benzène, et leurs mélanges,
- on comprime par pressage isostatique ladite poudre pour former un premier ensemble,
- on extrait ledit premier ensemble de ladite première enveloppe et on dispose ledit matériau diélectrique autour dudit premier ensemble à l'intérieur d'une deuxième enveloppe, ladite première et ladite deuxième enveloppe étant constituées d'un matériau continu déformable chimiquement compatible avec ledit premier polymère,
- on comprime ledit matériau diélectrique par pressage isostatique pour constituer un deuxième ensemble,
- on extrait ledit deuxième ensemble de ladite deuxième enveloppe et on introduit ledit deuxième ensemble dans un tube dudit métal,
- on fait le vide et on ferme hermétiquement ledit tube afin de former une billette,
- on effectue une transformation mécanique de ladite billette afin de réduire ses cotes transversales, ladite transformation mécanique consistant en au moins une opération d'étirage au travers d'une filière, pour obtenir un troisième ensemble qui est ledit câble, lorsque le rapport des diamètres dudit deuxième ensemble entre deux étirages successifs ne varie plus avec la réduction desdites cotes de ladite billette, on obtient un polymère constituant ladite première couche dont la conductivité électrique est améliorée par rapport à celle dudit premier polymère.

Les polymères conducteurs se présentent sous la forme d'une poudre qui n'est pas directement utilisable dans les procédés habituels de fabrication des câbles. Le procédé selon l'invention présente l'avantage de permettre la mise en oeuvre direct de la poudre de polymère et donc de supprimer la matrice isolante employée dans les procédés connus. Le polymère employé seul confère à la couche une conductivité plus élevée qui est encore accrue par la transformation mécanque qu'elle subit.

Le procédé selon l'invention permet la fabrication d'un câble dans lequel ledit polymère conducteur est choisi parmi un polymère conducteur, un mélange de polymères conducteurs et un alliage de polymères conducteurs. Ledit polymère conducteur peut être un polymère dopé choisi parmi une polyaniline, ou bien un copolymère dopé choisi parmi un copolymère de l'aniline avec un acide amino-naphtalène sulphonique, un copolymère de l'aniline avec l'acide 3-(3-aminobenzyloxy)-1-propane sulfonique, un copolymère de l'aniline avec l'acide 3-(2-aminophénoxy)-1-propane sulfonique, un copolymère de l'aniline avec l'acide 4-(2-aminophénoxy)-1-butane sulfonique, un copolymère de l'aniline avec le 1-amino 2, 6-bis (4-sulfobutoxy) benzène, et leurs mélanges.

Ladite couche externe est constituée d'un métal choisi parmi le cuivre, le cupronickel, le laiton et le bronze.

On utilise comme matériau diélectrique un matériau chimiquement inerte vis à vis dudit polymère conducteur choisi de préférence parmi l'alumine, la magnésie, le polytétrafluoroéthylène (PTFE), une polyaniline dédopée et un copolymère du chlorure de vinyle et de l'éther vinyl-isobutylique.

Selon une variante de réalisation, ladite âme est constituée d'un polymère conducteur, un mélange de polymères conducteurs et un alliage de polymère conducteurs. De préférence ledit polymère conducteur est choisi parmi une polyaniline, le N-phényl P-phénylène diamine, un polythiophène, un polyarylthiophène, un polypyrolle, un polyarylvinylène, un poly(P-phénylène sulfure), un poly(P-phénylène), un paraphénylène vinylène (PPV), leurs copolymères et leurs mélanges. De préférence encore ledit polymère conducteur est choisi parmi un copolymère du N-phényl P-phénylène diamine avec un acide amino-naphtalène sulphonique, un copolymère de l'aniline avec un acide amino-naphtalène sulphonique, un copolymère de l'aniline avec l'acide 3-(3-aminobenzyloxy)-1-propane sulfonique, un copolymère de l'aniline avec l'acide 3-(2-aminophénoxy)-1-propane sulfonique, un copolymère de l'aniline avec l'acide 4-(2-aminophénoxy)-1-butane sulfonique, un copolymère de l'aniline avec le 1-amino 2, 6-bis (4-sulfobutoxy) benzène, et leurs mélanges.

Le câble réalisé par le procédé décrit ci-dessus doit avoir une première couche dont la conductivité est au-moins égale à 2S/cm pour présenter des performances acceptables par un utilisateur.

Le procédé selon la présente invention s'applique à la fabrication d'un câble multifilamentaire, chacun des filaments ayant une structure coaxiale comprenant une âme conductrice centrale entourée d'au moins une première couche constituée d'un polymère conducteur recouverte d'une deuxième couche en matériau diélectrique, et une couche externe en métal, ledit polymère conducteur étant choisi parmi une polyaniline, un copolymère de l'aniline avec un acide amino-naphtalène sulphonique, un copolymère de l'aniline avec l'acide 3-(3-aminobenzyloxy)-1-propane sulfonique, un copolymère de l'aniline avec l'acide 3-(2-aminophénoxy)-1-propane sulfonique, un copolymère de l'aniline avec l'acide 4-(2-aminophénoxy)-1-butane sulfonique, un copolymère de l'aniline avec le 1-amino 2, 6-bis (4-sulfobutoxy) benzène, et leurs mélanges. Dans ce cas le procédé comprend en outre les étapes suivantes réalisées à température ambiante:
- on tronçonne ledit troisième ensemble en tiges de courtes longueur,
- on juxtapose lesdites tiges dans un tube métallique
- on fait le vide et on ferme hermétiquement ledit tube afin de former une billette,
- on effectue ladite transformation mécanique de ladite billette afin de réduire ses cotes transversales.

Et on obtient par ce procédé un câble multifilamentaire.

D'autres caractéristiques et avantages de la présente invention apparaîtront à la lecture des exemples suivants de réalisation, donnés bien entendu à titre illustratif mais nullement limitatif, et dans le dessin annexé sur lequel:
- la figure 1 représente l'évolution du rapport β des diamètres de la polyaniline entre deux étirages successifs en fonction du taux de réduction de la billette, le rapport β en est donné en ordonnée et en abscisse le taux de réduction R en %,
- les figures 2 à 4 montrent l'évolution des pics du spectre infrarouge de la polyaniline en fonction du taux de réduction R de la billette, l'intensité I en unités relatives est donné en ordonnée et en abscisse la longueur d'onde λ en cm⁻¹,
- la figure 5 est une vue en perspective d'un câble montrant les différentes couches qui le compose.

### EXEMPLE 1

Une polyaniline de conductivité 4S/cm est conditionnée en vue de sa transformation mécanique par le procédé de l'invention. La poudre de polyaniline est étuvée sous vide à 70°C pendant 96 heures.

Dans un tube en élastomère, on introduit 3,25 grammes de poudre de polyaniline conditionnée. L'ensemble est mis en vibration pendant 24 heures à température ambiante. Le tube est ensuite fermé de manière étanche.

Le tube fermé contenant la poudre de polyaniline conditionnée et densifiée est introduit dans une presse isostatique. La pression monte progressivement en moins de 5 minutes à 2500 bars. Elle est maintenue à cette valeur à température ambiante pendant une durée comprise entre 30 secondes et 30 minutes, préférentiellement cette durée est de 5mn. La pression est alors relâchée progressivement jusqu'à la pression atmosphérique. La durée de cette opération étant comprise entre 30 secondes et 30 minutes, et de préférence de 1mn.

Le barreau de polyaniline compacté est extrait du tube en élastomère. Il mesure 6,6mm de diamètre et 95mm de longueur. Ce barreau est introduit dans un tube en cuivre fermé à une extrémité, de 6,6mm de diamètre intérieur et 14mm de diamètre extérieur (3,9mm d'épaisseur de paroi). La billette ainsi constituée est mise en pompage sous vide dynamique jusqu'à une pression résiduelle de 3.10⁻³mm de mercure. La billette est alors fermée de manière étanche.

La billette est passée au travers de filières successives à température ambiante. On obtient finalement une billette de 1,61mm de diamètre extérieur, le barreau de polyaniline situé à l'intérieur ayant un diamètre de 0,44mm.

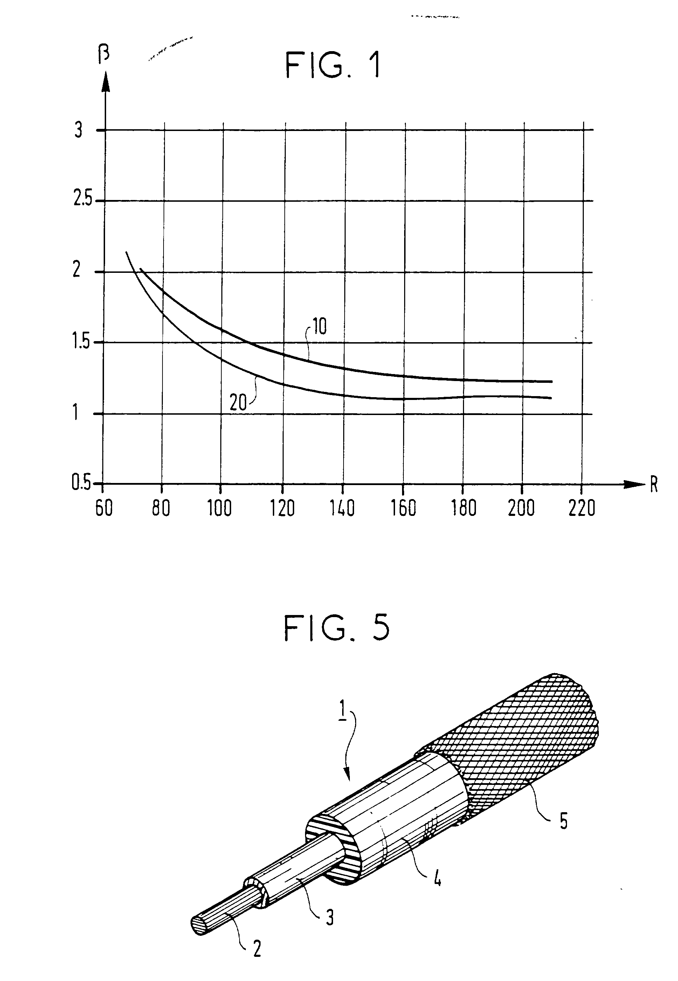

Sur la figure 1, la courbe 10 montre que jusqu'à une valeur de 150% du taux de réduction du diamètre de la billette le rapport β diminue, donc qu'il s'agit d'une phase de densification de la polyaniline. Au delà de 150% se produit la déformation du polymère qui modifie sa conductivité. La polyaniline obtenue par le procédé de l'invention a une conductivité de 40S/cm.

### EXEMPLE 2

Une polyaniline de conductivité 4S/cm est traitée de manière analogue à ce qui est décrit dans l'exemple 1. Après conditionnement on introduit 3,06g de poudre de polyaniline dans le tube en élastomère pour être compactée. Le barreau résultant mesure 6,4mm de diamètre et 95mm de longueur. On l'introduit dans un tube de cuivre de 6,4mm de diamètre intérieur et de 10,5mm de diamètre extérieur. Après transformation mécanique on obtient un diamètre extérieur de 0,48mm et un diamètre de polyaniline de 0,25mm.

Sur la courbe 20 de la figure 1 on voit que dans ce cas la déformation de la polyaniline se produit dès que le taux de réduction du diamètre de la billette atteint 130%. La polyaniline obtenue par le procédé de l'invention a une conductivité de 60S/cm.

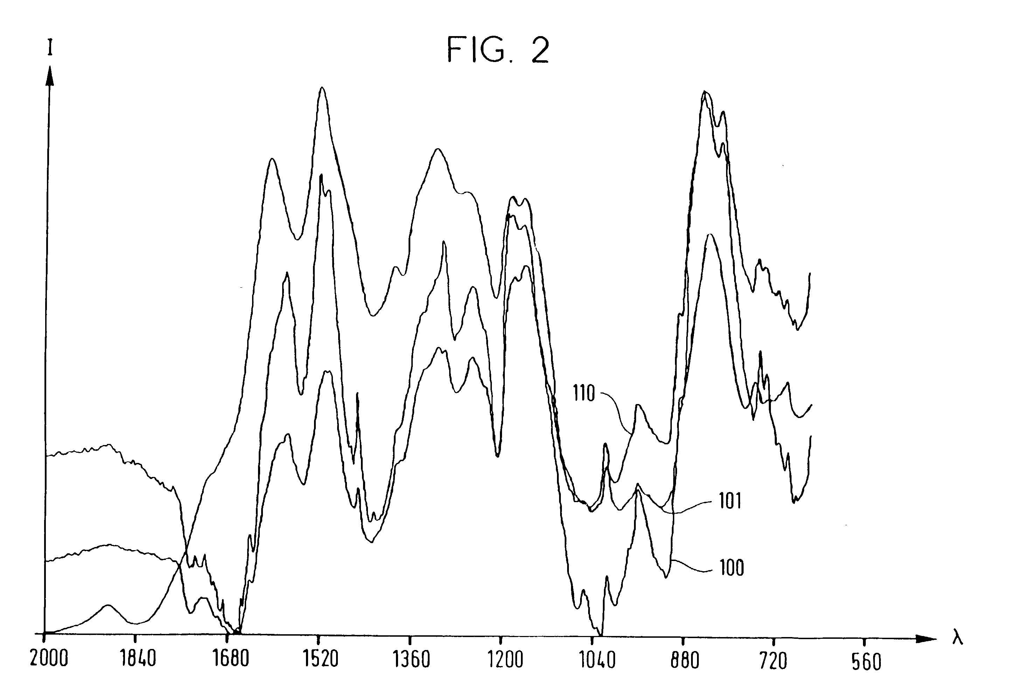

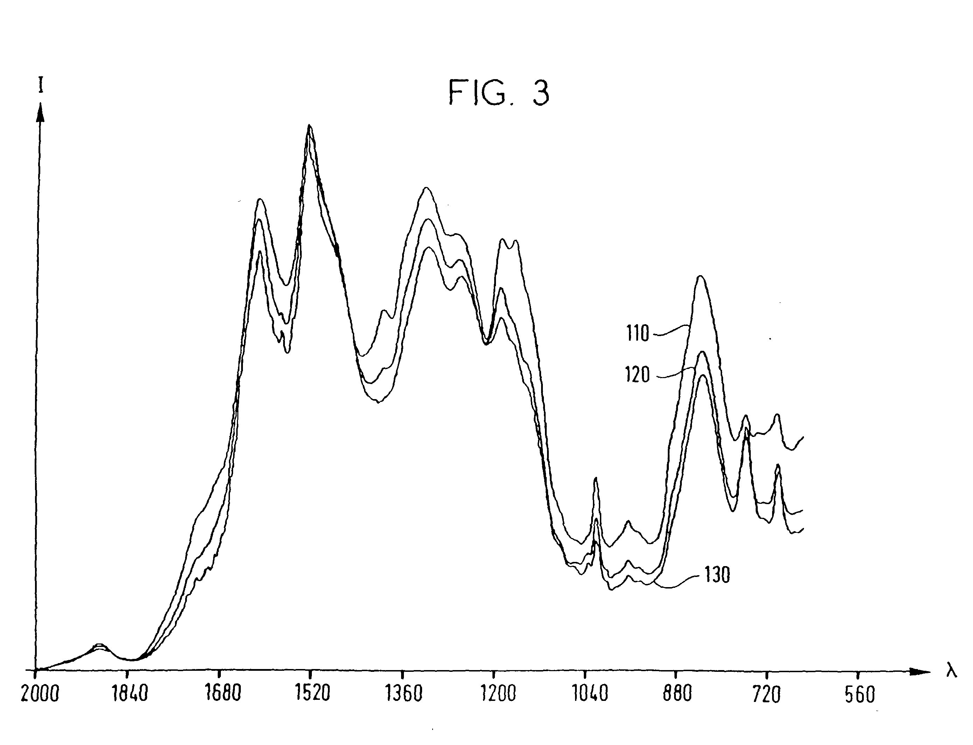

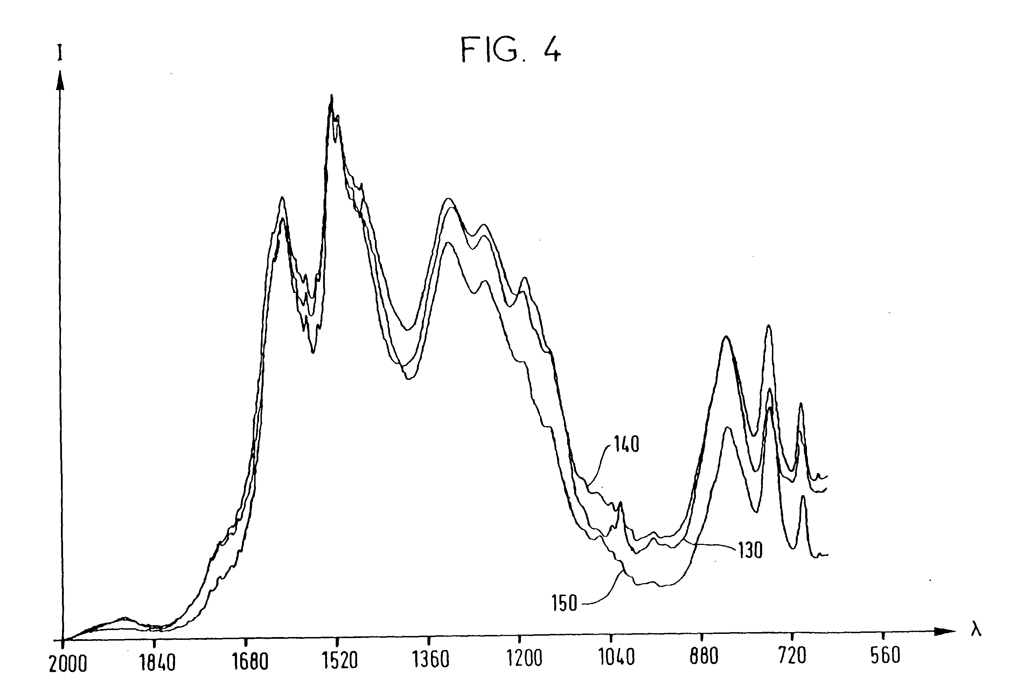

On constate corélativement une évolution des pics du spectre infrarouge en fonction du taux de réduction de la billette, notamment vers 1520cm⁻¹, 1200cm⁻¹, 1000cm⁻¹, et 950cm⁻¹ comme le montrent les figures 2 à 4. Les spectres référencés 110 et 110', 120, 130, 140 et 150 correspondent respectivement à un taux de réduction de 72%, 160%, 192%, 224%, et 256%. Le spectre 100 est celui observé sur une poudre de polyaniline et le spectre 101 correspond à cette poudre une fois compactée.

### EXEMPLE 3

De la poudre de polyaniline conditionnée comme décrit dans l'exemple 1 est utilisée pour la réalisation d'un câble selon la présente invention. Dans un tube en élastomère au centre duquel est placée une âme conductrice en cuivre, on introduit 2,5 grammes de poudre de polyaniline conditionnée. L'ensemble est mis en vibration pendant 24 heures. Le tube est ensuite fermé de manière étanche.

Le tube fermé contenant la poudre de polyaniline conditionnée et densifiée autour de l'âme conductrice est introduit dans une presse isostatique pour être comprimé, dans les conditions décrites dans l'exemple 1, afin d'obtenir un barreau.

De la même manière que ci-dessus, on place au centre d'un tube en élastomère le barreau constitué de l'âme entourée de la polyaniline obtenu précédemment, on introduit la poudre de polymère isolant (polyaniline dédopée) et on effectue à nouveau une compression à la presse isostatique.

Le barreau constitué de l'âme conductrice entouré de la polyaniline et du matériau diélectrique est extrait du tube en élastomère et introduit dans un tube en cuivre recuit fermé à une extrémité. La billette est alors vidée de l'air qu'elle contient et fermée de manière étanche. La billette ensuite est passée au travers de filières successives.

On obtient finalement un câble coaxial 1, représenté en perspective sur la figure 5, qui se compose d'une âme centrale conductrice 2 2 entourée d'une première couche de polymère conducteur 3 (polyaniline) recouverte d'une deuxième couche 4 de polymère isolant, la couche de blindage externe 5 étant constituée par le matériau du tube extérieur de la billette (cuivre).

Le procédé selon l'invention n'est pas limité à la réalisation de câble comportant deux couches entre l'âme centrale et la couche externe de blindage, mais le procédé permet de réaliser tout type de câble coaxial quel qu'en soit le nombre de couches.

## Revendications

1. Procédé de fabrication d'un polymère de conductivité électrique élevée comprenant les étapes suivantes réalisées à température ambiante :
- on introduit dans une première enveloppe une poudre constituée d'un premier polymère conducteur et on ferme hermétiquement ladite première enveloppe, ledit premier polymère conducteur étant choisi parmi une polyaniline, un copolymère de l'aniline avec un acide amino-naphtalène sulphonique, un copolymère de l'aniline avec l'acide 3-(3-aminobenzyloxy)-1-propane sulfonique, un copolymère de l'aniline avec l'acide 3-(2-aminophénoxy)-1-propane sulfonique, un copolymère de l'aniline avec l'acide 4-(2-aminophénoxy)-1-butane sulfonique, un copolymère de l'aniline avec le 1-amino 2, 6-bis (4-sulfobutoxy) benzène, et leurs mélanges,
- on comprime par pressage isostatique ladite poudre dans ladite première enveloppe pour former un barreau,
- on extrait ledit barreau de ladite première enveloppe et on introduit ledit barreau dans une deuxième enveloppe, ladite deuxième enveloppe étant constituée d'un matériau continu déformable, chimiquement et mécaniquement compatible avec ledit premier polymère,
- on fait le vide et on ferme hermétiquement ladite enveloppe afin de former une billette,
- on effectue une transformation mécanique de ladite billette afin de réduire ses cotes transversales, ladite transformation mécanique consistant en au moins une opération d'étirage au travers d'une filière,
lorsque le rapport des diamètres dudit barreau entre deux étirages successifs ne varie plus avec la réduction desdites cotes de ladite billette, on obtient un deuxième polymère dont la conductivité électrique est améliorée par rapport à celle dudit premier polymère.

2. Procédé selon la revendication 1, dans lequel la vitesse dudit étirage est comprise entre 0,5 mètre par minute et 5 mètres par minute.

3. Procédé selon l'une des revendications 1 et 2, dans lequel ledit premier polymère est une polyaniline sulfonée.

4. Procédé selon l'une des revendications précédentes, dans lequel ladite première enveloppe est constituée d'un matériau choisi parmi un élastomère, le polychlorure de vinyle armé ou un silicone.

5. Procédé selon l'une des revendications précédentes, dans lequel ladite deuxième enveloppe a une épaisseur de paroi comprise entre 0,5mm et 5mm.

6. Procédé selon l'une des revendications précédentes, dans lequel ladite deuxième enveloppe est constituée d'un matériau choisi parmi un métal, un alliage de métaux, un polymère isolant, un mélange de polymères isolants et un alliage de polymères isolants.

7. Procédé selon l'une des revendications précédentes, dans lequel ledit premier polymère est coprécipité avec un polymère cristallin préalablement à son introduction dans ladite première enveloppe.

8. Procédé selon l'une des revendications précédentes, dans lequel ledit deuxième polymère a une conductivité au moins dix fois plus élevée que la conductivité dudit premier polymère, ledit premier polymère conducteur étant choisi parmi une polyaniline, un copolymère de l'aniline avec un acide amino-naphtalène sulphonique, un copolymère de l'aniline avec l'acide 3-(3-aminobenzyloxy)-1-propane sulfonique, un copolymère de l'aniline avec l'acide 3-(2-aminophénoxy)-1-propane sulfonique, un copolymère de l'aniline avec l'acide 4-(2-aminophénoxy)-1-butane sulfonique, un copolymère de l'aniline avec le 1-amino 2, 6-bis (4-sulfobutoxy) benzène, et leurs mélanges.

9. Procédé de fabrication d'un câble à structure coaxiale comprenant une âme conductrice centrale entourée d'au moins une première couche en polymère conducteur recouverte d'une deuxième couche en matériau diélectrique, et une couche externe en métal, procédé comprenant les étapes suivantes réalisées à température ambiante :
- on dispose dans une première enveloppe une poudre constituée d'un premier polymère conducteur autour de ladite âme centrale et on ferme hermétiquement ladite première enveloppe, ledit premier polymère conducteur étant choisi parmi une polyaniline, un copolymère de l'aniline avec un acide amino-naphtalène sulphonique, un copolymère de l'aniline avec l'acide 3-(3-aminobenzyloxy)-1-propane sulfonique, un copolymère de l'aniline avec l'acide 3-(2-aminophénoxy)-1-propane sulfonique, un copolymère de l'aniline avec l'acide 4-(2-aminophénoxy)-1-butane sulfonique, un copolymère de l'aniline avec le 1-amino 2, 6-bis (4-sulfobutoxy) benzène, et leurs mélanges,
- on comprime par pressage isostatique ladite poudre pour former un premier ensemble,
- on extrait ledit premier ensemble de ladite première enveloppe et on dispose ledit matériau diélectrique autour dudit premier ensemble à l'intérieur d'une deuxième enveloppe, ladite première et ladite deuxième enveloppe étant constituées d'un matériau continu déformable chimiquement compatible avec ledit premier polymère,
- on comprime ledit matériau diélectrique par pressage isostatique pour constituer un deuxième ensemble,
- on extrait ledit deuxième ensemble de ladite deuxième enveloppe et on introduit ledit deuxième ensemble dans un tube dudit métal,
- on fait le vide et on ferme hermétiquement ledit tube afin de former une billette,
- on effectue une transformation mécanique de ladite billette afin de réduire ses cotes transversales, ladite transformation mécanique consistant en au moins une opération d'étirage au travers d'une filière, pour obtenir un troisième ensemble qui est ledit câble, lorsque le rapport des diamètres dudit deuxième ensemble entre deux étirages successifs ne varie plus avec la réduction desdites cotes de ladite billette, on obtient un polymère constituant ladite première couche dont la conductivité électrique est améliorée par rapport à celle dudit premier polymère.

10. Câble réalisé par le procédé de la revendication 9, dans lequel ladite couche externe est constituée d'un métal choisi parmi le cuivre, le cupronickel, le laiton et le bronze.

11. Câble réalisé par le procédé de la revendication 9, dans lequel ledit matériau diélectrique est un matériau chimiquement inerte vis à vis dudit polymère conducteur choisi parmi l'alumine, la magnésie, le polytétrafluoroéthylène, une polyaniline dédopée, et un copolymère du chlorure de vinyle et de l'éther vinyl-isobutylique.

12. Câble réalisé par le procédé de la revendication 9, dans lequel ladite âme est constituée d'un polymère conducteur choisi parmi une polyaniline, le N-phényl P-phénylène diamine, un polythiophène, un polyarylthiophène, un polypyrolle, un polyarylvinylène, un poly(P-phénylène sulfure), un poly(P-phénylène), un paraphénylène vinylène, leurs copolymères et leurs mélanges.

13. Câble réalisé par le procédé de la revendication 9, dans lequel ladite âme est constituée d'un copolymère choisi parmi un copolymère du N-phényl P-phénylène diamine avec un acide amino-naphtalène sulphonique, un copolymère de l'aniline avec un acide amino-naphtalène sulphonique, un copolymère de l'aniline avec l'acide 3-(3-aminobenzyloxy)-1-propane sulfonique, un copolymère de l'aniline avec l'acide 3-(2-aminophénoxy)-1-propane sulfonique, un copolymère de l'aniline avec l'acide 4-(2-aminophénoxy)-1-butane sulfonique, un copolymère de l'aniline avec le 1-amino 2, 6-bis (4-sulfobutoxy) benzène, et leurs mélanges.

14. Câble réalisé par le procédé de la revendication 9, dans lequel ladite première couche a une conductivité au-moins égale à 2S/cm.

15. Procédé selon la revendication 9, appliqué à la fabrication d'un câble multifilamentaire, chacun des filaments ayant une structure coaxiale comprenant une âme conductrice centrale entourée d'au moins une première couche constituée d'un polymère conducteur recouverte d'une deuxième couche en matériau diélectrique, et une couche externe en métal, ledit polymère conducteur étant choisi parmi une polyaniline, un copolymère de l'aniline avec un acide amino-naphtalène sulphonique, un copolymère de l'aniline avec l'acide 3-(3-aminobenzyloxy)-1-propane sulfonique, un copolymère de l'aniline avec l'acide 3-(2-aminophénoxy)-1-propane sulfonique, un copolymère de l'aniline avec l'acide 4-(2-aminophénoxy)-1-butane sulfonique, un copolymère de l'aniline avec le 1-amino 2, 6-bis (4-sulfobutoxy) benzène, et leurs mélanges, procédé comprenant en outre les étapes suivantes réalisées à température ambiante:
- on tronçonne ledit troisième ensemble en tiges de courte longueur,
- on juxtapose lesdites tiges dans un tube métallique
- on fait le vide et on ferme hermétiquement ledit tube afin de former une billette,
- on effectue ladite transformation mécanique de ladite billette afin de réduire ses cotes transversales.

16. Câble multifilamentaire réalisé par le procédé de la revendication 15.

## Claims

1. A process for manufacturing a polymer of high electrical conductivity, the process comprising the following steps carried out at room temperature:
- a powder consisting of a first conductive polymer is introduced into a first sheath and said first sheath is hermetically sealed, said first conductive polymer being chosen from a polyaniline, a copolymer of aniline with an aminonaphthalenesulphonic acid, a copolymer of aniline with 3-(3-aminobenzyloxy)-1-propanesulphonic acid, a copolymer of aniline with 3-(2-aminophenoxy)-1-propanesulphonic acid, a copolymer of aniline with 4-(2-aminophenoxy)-1-butanesulphonic acid, a copolymer of aniline with 1-amino-2,6-bis(4-sulpho-butoxy)benzene and mixtures thereof;
- said powder is compressed by isostatic pressing in said first sheath in order to form a bar;
- said bar is removed from said first sheath and said bar is introduced into a second sheath, said second sheath being made of a deformable continuous material which is chemically and mechanically compatible with said first polymer;
- a vacuum is created and said sheath is hermetically sealed to form a billet;
- a mechanical conversion of said billet is carried out to reduce its transverse dimensions, said mechanical conversion consisting of at least one drawing operation through a die, and when the ratio of the diameters of said bar between two successive drawing operations no longer varies with the reduction of said dimensions of said billet, a second polymer is obtained, the electrical conductivity of which is improved over that of said first polymer.

2. A process according to claim 1, in which the rate of said drawing is from 0.5 metres per minute to 5 metres per minute.

3. A process according to either claim 1 or claim 2, in which said first polymer is a sulphonated polyaniline.

4. A process according to any preceding claim, in which said first sheath is made of a material chosen from an elastomer, reinforced polyvinylchloride and a silicone.

5. A process according to any preceding claim, in which said second sheath has a wall thickness of from 0.5 mm to 5 mm.

6. A process according to any preceding claim, in which said second sheath is made of a material chosen from a metal, a metal alloy, an insulative polymer, a blend of insulative polymers and an alloy of insulative polymers.

7. A process according to any preceding claim, in which said first polymer is coprecipitated with a crystalline polymer before it is introduced into said first sheath.

8. A process according to any preceding claim, in which said second polymer has a conductivity at least ten times higher than the conductivity of said first polymer, said first conductive polymer being chosen from a polyaniline, a copolymer of aniline with an aminonaphthalenesulphonic acid, a copolymer of aniline with 3-(3-aminobenzyloxy)-1-propanesulphonic acid, a copolymer of aniline with 3-(2-aminophenoxy)-1-propanesulphonic acid, a copolymer of aniline with 4-(2-aminophenoxy)-1-butanesulphonic acid, a copolymer of aniline with 1-amino-2,6-bis(4-sulpho-butoxy)benzene and mixtures thereof.

9. A process for manufacturing a coaxial cable, comprising a central conductive core surrounded by at least a conductive polymer first layer covered with a dielectric second layer, and a metal external layer, which process comprises the following steps carried out at room temperature:
- a powder consisting of a first conductive polymer is placed around said central core in a first sheath and said first sheath is hermetically sealed, said first conductive polymer being chosen from a polyaniline, a copolymer of aniline with an aminonaphthalenesulphonic acid, a copolymer of aniline with 3-(3-aminobenzyloxy)-1-propanesulphonic acid, a copolymer of aniline with 3-(2-aminophenoxy)-1-propanesulphonic acid, a copolymer of aniline with 4-(2-aminophenoxy)-1-butanesulphonic acid, a copolymer of aniline with 1-amino-2,6-bis(4-sulphobutoxy)benzene and mixtures thereof;
- said powder is compressed isostatically in order to form a first assembly;
- said first assembly is removed from said first sheath and said dielectric material is placed around said first assembly inside a second sheath, said first sheath and said second sheath being made of a continuous deformable material which is chemically compatible with said first polymer;
- said dielectric is compressed isostatically in order to constitute a second assembly;
- said second assembly is removed from said second sheath and introduced into a tube of said metal;
- a vacuum is created and said tube is hermetically sealed so as to form a billet; and
- a mechanical conversion of said billet is carried out so as to reduce its transverse dimensions, said mechanical conversion consisting of at least one drawing operation through a die, in order to obtain a third assembly, which is said cable, and when the ratio of the diameters of said second assembly between two successive drawing operations no longer varies with the reduction of said dimensions of said billet, a polymer constituting said first layer is obtained, the electrical conductivity of which is improved over that of said first polymer.

10. A cable produced by the process of claim 9, in which said external layer is made of a metal chosen from copper, cupronickel, brass and bronze.

11. A cable produced by the process of claim 9, in which said dielectric is chemically inert with respect to said conductive polymer, chosen from alumina, magnesia, polytetrafluoroethylene, a dedoped polyaniline and a vinylchloride/isobutyl vinyl ether copolymer.

12. A cable produced by the process of claim 9, in which said core is made of a conductive polymer chosen from a polyaniline, N-phenyl-p-phenylenediamine, a polythiophene, a polyarylthiophene, a polypyrrole, a polyarylvinylene, a poly(p-phenylene sulphide), a poly(p-phenylene), a paraphenylenevinylene (PPV), copolymers thereof and blends thereof.

13. A cable produced by the process of claim 9, in which said core is made of a copolymer chosen from a copolymer of N-phenyl-p-phenylenediamine with an aminonaphthalenesulphonic acid, a copolymer of aniline with an aminonaphthalenesulphonic acid, a copolymer of aniline with 3-(3-aminobenzyloxy)-1-propanesulphonic acid, a copolymer of aniline with 3-(2-aminophenoxy)-1-propanesulphonic acid, a copolymer of aniline with 4-(2-aminophenoxy)-1-butanesulphonic acid, a copolymer of aniline with 1-amino-2,6-bis(4-sulphobutoxy)benzene and mixtures thereof.

14. A cable produced by the process of claim 9, in which said first layer has a conductivity at least equal to 2 S/cm.

15. A process according to claim 9, applied to the manufacture of a multiconductor cable, each conductor having a coaxial structure comprising a central conductive core surrounded by at least a conductive polymer first layer covered with a dielectric second layer, and a metal external layer, said conductive polymer being chosen from a polyaniline, a copolymer of aniline with an aminonaphthalenesulphonic acid, a copolymer of aniline with 3-(3-aminobenzyloxy)-1-propanesulphonic acid, a copolymer of aniline with 3-(2-aminophenoxy)-1-propanesulphonic acid, a copolymer of aniline with 4-(2-aminophenoxy)-1-butanesulphonic acid, a copolymer of aniline with 1-amino-2,6-bis(4-sulphobutoxy)benzene and mixtures thereof, which process furthermore includes the following steps carried out at room temperature:
- said third assembly is sectioned into short rods;
- said rods are juxtaposed in a metal tube;
- a vacuum is created and said tube is hermetically sealed to form a billet; and
- said mechanical conversion of said billet is carried out to reduce its transverse dimensions.

16. A multifilament cable produced by the process of claim 15.

## Patentansprüche

1. Verfahren zur Herstellung eines Polymers mit erhöhter elektrischer Leitung, umfassend die folgenden Schritte, realisiert bei Umgebungstemperatur:
- Einführen eines Pulvers, bestehend aus einem ersten leitenden Polymer in einen ersten Behälter und hermetisches Verschließen des ersten Behälters, wobei der erste leitende Polymer gewählt ist aus Polyanilin, einem Anilin-Kopolymer mit schwefliger Aminonaphtalensäure, einem Anilin-Kopolymer mit einer schwefligen 3- (3-Aminobenzyloxy) -1-Propansäure, einem Anilin-Kopolymer mit schwefliger 3- (2-Aminophenoxy) -1-Propansäure, einem Anilin-Kopolymer mit schwefliger 4- (2-Aminophenoxy) -1-Butansäure, einem Anilin-Kopolymer mit 1-Amino 2, 6-bis (4-Sulfobutoxy) Benzol, und deren Mischungen,
- Kompression durch isostatisches Pressen des Pulvers in dem ersten Behälter, um einen Barren zu bilden,
- Extraktion des Barrens aus dem ersten Behälter und Einführen des Barrens in einen zweiten Behälter, wobei der zweite Behälter aus einem kontinuierlich deformierbaren Material gebildet ist, das chemisch und mechanisch kompatibel mit dem ersten Polymer ist,
- Evakuierung und hermetisches Verschließen des Behälters zur Bildung eines Blockes,
- Durchführung einer mechanischen Transformation des Blocks zur Reduzierung seiner seitlichen Ränder, wobei die mechanische Transformation aus zumindest einem Zugvorgang durch eine Zugdüse besteht, wobei, wenn das Verhältnis der Durchmesser des Barrens zwischen zwei aufeinanderfolgenden Zugvorgängen nicht weiter variiert mit der Reduktion der Ränder des Blocks, man einen zweiten Polymer erhält, dessen elektrische Leitfähigkeit gegenüber derjenigen des ersten Polymers verbessert ist.

2. Verfahren nach Anspruch 1, bei dem die Geschwindigkeit des Zugvorgangs zwischen 0,5 Metern/Minute und 5 Metern/Minute liegt.

3. Verfahren nach einem der Ansprüche 1 und 2, wobei der erste Polymer ein sulfunierter Polyanilin ist.

4. Verfahren nach einem der vorhergehenden Ansprüche, wobei der erste Behälter aus einem Material gebildet ist, gewählt aus Elastomer, Polyvinylchlorid, mit Silikon armiert.

5. Verfahren nach einem der vorhergehenden Ansprüche, wobei der zweite Behälter eine Wanddicke zwischen 0,5 mm und 5 mm hat.

6. Verfahren nach einem der vorhergehenden Ansprüche, wobei der zweite Behälter aus einem Material gebildet ist, gewählt aus Metall, einer Metallegierung, einem isolierenden Polymer, einer Mischung isolierender Polymere und einer Legierung isolierender Polymere.

7. Verfahren nach einem der vorhergehenden Ansprüche, wobei der erste Polymer mit einem kristallinem Polymer kopräzipitiert ist, vorzugsweise bei seinem Einführen in den ersten Behälter.

8. Verfahren nach einem der vorhergehenden Ansprüche, bei dem der zweite Polymer eine Leitfähigkeit hat, die zumindest zehnmal höher ist als die Leitfähigkeit des ersten Polymers, wobei der erste leitende Polymer gewählt ist aus Polyanilin, einem Anilin-Kopolymer mit schwefliger Aminonaphtalensäure, einem Anilin-Kopolymer mit einer schwefligen 3- (3-Aminobenzyloxy) -1-Propansäure, einem Anilin-Kopolymer mit schwefliger 3- (2-Aminophenoxy) -1-Propansäure, einem Anilin-Kopolymer mit einer schwefligen 4- (2-Aminophenoxy) -1-Butansäure, einem Anilin-Kopolymer mit 1-Amino 2, 6-bis (4-Sulfobutoxy) Benzol, und deren Mischungen.

9. Verfahren zur Herstellung eines Kabels mit einer koaxialen Struktur, umfassend eine leitende zentrale Seele, die von zumindest einer ersten leitenden Kopolymerschicht umgeben ist, bedeckt mit einer zweiten Schicht aus einem dielektrischen Material und einer externen Metallschicht, wobei das Verfahren die folgenden Schritte realisiert bei Umgebungstemperatur, umfaßt:
- Anordnung eines aus einem ersten leitenden Polymer gebildeten Puders in einem ersten Behälter um die zentrale Seele und hermetischer Verschluß des ersten Behälters, wobei der erste leitende Polymer gewählt ist aus Polyanilin, einem Anilin-Kopolymer mit einer schwefligen Aminonaphtalensäure, einem Anilin-Kopolymer mit einer schwefligen 3- (3-Aminobenzyloxy) -1-Propansäure, einem Anilin-Kopolymer mit schwefliger 3- (2-Aminophenoxy)-1-Propansäure, einem Anilin-Kopolymer mit einer schwefligen 4- (2-Aminophenoxy) -1-Butansäure, einem Anilin-Kopolymer mit 1-Amino 2, 6-bis (4-Sulfobutoxy) Benzol, und deren Mischungen,
- Kompression durch isostatisches Pressen des Pulvers zur Bildung einer ersten Anordnung,
- Extraktion der ersten Anordnung aus dem ersten Behälter und Anordnung des dielektrischen Materials um die erste Anordnung im Inneren eines zweiten Behälters, wobei der erste und zweite Behälter aus einem kontinuierlich deformierbaren und chemisch mit dem ersten Polymer kompatiblen Material gebildet sind.
- Kompression des dielektrischen Materials durch isostatisches Pressen zur Bildung einer zweiten Anordnung,
- Extraktion der zweiten Anordnung aus dem zweiten Behälter und Einführen der zweiten Anordnung in eine Metallröhre,
- Evakuierung und hermetischer Verschluß der Röhre zur Bildung eines Blocks,
- Durchführung einer mechanischen Transformation des Blocks zur Reduzierung seiner seitlichen Ränder, wobei die mechanische Transformation aus zumindest einem Zugvorgang durch eine Zugdüse besteht, um eine dritte Anordnung zu erzielen, bei der es sich um das Kabel handelt, wobei, wenn das Verhältnis der Durchmesser der zweiten Anordnung zwischen zwei aufeinanderfolgenden Zugdüsen nicht weiter mit einer Reduktion der Ränder des Blocks variiert, man einen Polymer erhält, der die erste Schicht bildet, dessen elektrische Leitfähigkeit gegenüber derjenigen des ersten Polymers verbessert ist.

10. Kabel, realisiert gemäß dem Verfahren nach Anspruch 9, bei dem die äußere Schicht aus einem Metall gebildet ist, gewählt aus Kupfer, Kupfernickel, Messing und Bronze.

11. Kabel, realisiert durch das Verfahren nach Anspruch 9, bei dem das dielektrische Material ein chemisch gegenüber dem leitenden Polymer innertes Material ist, gewählt aus Aluminium, Magnesium, Polytetraflurethylen, dedotiertes Polyanilin, und einem Chlorvinyl-Kopolymer sowie Ethervinyl-Isobutylbutyrat.

12. Kabel, realisiert durch das Verfahren nach Anspruch 9, bei dem die Seele aus einem leitenden Polymer gemacht ist, gewählt aus Polyanilin N-Phenyl-P-Phenylendiamin, einem Polythiophen, einem Polyarylthiophen, einem Polypyrol, einem Polyarylvinylen, einem Poly(P-Phenylensulfur), einem Poly (P-Phenylen), einem Paraphenylenvinylen (PPV), deren Kopolymeren sowie deren Mischungen.

13. Kabel, realisiert durch das Verfahren nach Anspruch 9, bei dem die Seele aus einem Kopolymer gemacht ist, gewählt aus einem Kopolymer des N-Phenyl-P-Phenylendiamins mit einer schwefligen Aminonaphtalensäure, einem Anilin-Kopolymer mit einer schwefligen Aminonaphtalensäure, einem Anilin-Kopolymer mit einer schwefligen 3- (3-Aminobenzyloxy) -1-Propansäure, einem Anilin-Kopolymer mit schwefliger 3- (2-Aminophenoxy) -1-Propansäure, einem Anilin-Kopolymer mit einer schwefligen 4- (2-Aminophenoxy) -1-Butansäure, einem Anilin-Kopolymer mit 1-Amino 2, 6-bis (4-Sulfobutoxy) Benzol, und deren Mischungen.

14. Kabel, realisiert durch das Verfahren nach Anspruch 9, bei dem die erste Schicht eine Leitfähigkeit von zumindest 2S/cm hat.

15. Verfahren nach Anspruch 9, angewendet auf die Herstellung eines Multileiterkabels, wobei jeder der Leiter eine koaxiale Struktur hat, mit einer zentralen leitenden Seele, die von zumindest einer ersten Schicht umgeben ist, die aus einem leitenden Polymer gebildet ist, umgeben von einer zweiten Schicht aus einem dielektrischen Material und einer externen Metallschicht, wobei der leitende Polymer gewählt ist aus Polyanilin, einem Anilin-Kopolymer mit einer schwefligen Aminonaphtalensäure, einem AnilinKopolymer mit einer schwefligen 3- (3-Aminobenzyloxy) -1-Propansäure, einem Anilin-Kopolymer mit schwefliger 3- (2-Aminophenoxy) -1-Propansäure, einem Anilin-Kopolymer mit einer schwefligen 4- (2-Aminophenoxy) -1-Butansäure, einem Anilin-Kopolymer mit 1-Amino 2, 6-bis (4-Sulfobutoxy) Benzol, und deren Mischungen, wobei das Verfahren darüber hinaus die folgenden bei Umgebungstemperatur durchgeführten Schritte umfaßt:
- Unterteilen der dritten Anordnung in Stäbe kurzer Länge,
- Nebeneinander Anordnen der Stäbe in einer metallischen Röhre,
- Evakuierung und hermetisches Verschließen der Röhre zur Bildung eines Blocks,
- Durchführung der mechanischen Transformation des Blocks zur Reduzierung seiner seitlichen Ränder.

16. Multileiterkabel, realisiert nach dem Verfahren gemäß Anspruch 15.
